Europäisches Patentamt

European Patent Office

Office européen des brevets

(19)

(11) Veröffentlichungsnummer: **0 352 372 B1**

(12) **EUROPÄISCHE PATENTSCHRIFT**

(45) Veröffentlichungstag der Patentschrift: **25.03.92**

(51) Int. Cl.⁵: **B62D  25/06**

(21) Anmeldenummer: **88202598.4**

(22) Anmeldetag: **12.11.88**

---

(54) **Sicherheitskraftfahrzeug.**

---

(30) Priorität: **26.07.88 EP 88112025**

(43) Veröffentlichungstag der Anmeldung:
**31.01.90 Patentblatt  90/05**

(45) Bekanntmachung des Hinweises auf die
Patenterteilung:
**25.03.92 Patentblatt  92/13**

(84) Benannte Vertragsstaaten:
**AT BE CH DE ES FR GB GR IT LI LU NL SE**

(56) Entgegenhaltungen:
**DE-A- 2 617 980
DE-B- 1 072 112
DE-U- 8 708 561
US-A- 2 991 120**

(73) Patentinhaber: **Ambros, Richard
Biberacher Strasse 5
W-8960 Kempten(DE)**

(72) Erfinder: **Ambros, Richard
Biberacher Strasse 5
W-8960 Kempten(DE)**

EP 0 352 372 B1

**Beschreibung**

In vorliegender Anmeldung ist ein als Sicherheitspersonenkraftwagen (SiPKW) ausgebildetes Sicherheitsautomobil (SiAutomobil) mit einem zwischen Dach und Vordach gebildeten Luftkanal aufgezeigt, wobei sowohl das Dach, als auch das Vordach doppelwandig ausgebildet sind.

Der zwischen Vordach und Dach vorgesehene Luftkanal ermöglicht einem gegen die Frontscheibe gerichteten Luftstrom ein Ausweichen nach oben über das Dach hinweg, so daß der Luftwiderstandswert eines Fahrzeuges mit Vordach gegenüber einem Fahrzeug ohne Vordach nicht wesentlich schlechter ist, was auch schon in der Gebrauchsmusterschrift DE-U-87 08 561.5 veranschaulicht wurde, in der ein üblicher PKW mit doppelwandigem Vordach aufgezeigt ist.

Dabei ist das Vordach über ein Parallelführungsgestänge schwenkbar am Dach befestigt, so daß zwischen dem ausgeschwenkten Vordach und dem Dach ein Luftkanal gebildet ist, der einem gegen die Frontscheibe gerichteten Luftstrom ein Ausweichen nach oben über das Dach hinweg ermöglicht.

Bei diesem Gebrauchsmuster handelt es sich im wesentlichen um das Vordach einer Spiegeleinrichtung für Kraftfahrzeuge, wobei hier auch die Anwendung eines entsprechend ausgebildeten doppelwandigen Vordaches über der Frontscheibe eines üblichen PKW's in Betracht gezogen wurde.

In der Offenlegungsschrift DE-A-37 25 591 ist das Vordach für eine zusätzliche Bewässerung der Frontscheibe während der Fahrt ausgebildet und mit einer Wanne zum Auffangen von Regenwasser im vorderen Teil des Vordaches ausgestattet. Außerdem ist hier auch je eine Auffangwanne für Regenwasser unmittelbar über der Frontscheibe und der Heckscheibe in einem doppelwandigen Dach untergebracht, wobei das Dach mit dem Vordach ein Überdach bildet, das sowohl über die Frontscheibe, als auch über die Heckscheibe hinausgezogen ist.

Der Fahrwind wird hier durch eine um die Schwenkachse eines Wischbügels gewölbte Frontscheibe nach außen abgelenkt, wobei durch einen Schlitz, der für die Durchführung des Wischbügels im Vordachboden vorgesehen ist, sowie durch Längsschlitze, die für das Auffangen von Regenwasser für die Frontscheibe in der Dachdecke angebracht sind, auch ein Luftdurchzug durch das doppelwandige Dach hindurch nach oben ermöglicht ist, was aber den Luftwiderstandswert des Fahrzeuges nur unzureichend verbessert.

Um den Luftwiderstandswert eines SiPKW's mit Vordach gemäß der Offenlegungsschrift DE-A-37 25 591 einem Fahrzeug gemäß der Gebrauchsmusterschrift DE-U-87 08 561.5 anzugleichen, sind in vorliegendem Ausführungsbeispiel die erfindungsgemäßen Merkmale letztgenannter Anmeldung genutzt, so daß auch bei einem SiPKW zwischen seinem doppelwandigen Vordach und seinem doppelwandigen Dach mit Auffangwannen für Regenwasser ein Luftkanal gebildet ist, der eine Ablenkung des gegen die Frontscheibe gerichteten Fahrwindes nach oben über das Dach hinweg ermöglicht. Zweckmäßigerweise ist vor dem Luftkanal ein den Luftstrom nach oben abweisender Vordachspoiler (Luftstromabweisblende) auf der Oberseite des Vordaches vor der Frontscheibe angeformt und zwar so, daß der zwischen Vordachspoiler und Frontscheibe gebildete Luftkanal in der Draufsicht nicht durchschaubar bzw. die Frontscheibe bei Stillstand des Fahrzeuges vor Schneefall geschützt ist.

Durch den Vordachspoiler wird in üblicher Weise die Anpreßkraft der Räder gegen die Fahrbahn während der Fahrt erhöht, indem der nach oben abgelenkte Luftstrom eine Kraftkomponente nach unten bewirkt, welche die Bodenhaftung des Fahrzeuges mit zunehmender Fahrgeschwindigkeit verbessert.

Aufgrund eine bei einem SiAutomobil vorgesehenen kegelförmig gewölbten Frontscheibe, über die der Luftstrom auf den Außenseiten der Scheibe optimal zur Seite abgelenkt wird, ist der vorgesehenen Luftkanal in dargestelltem Ausführungsbeispiel nur so breit ausgebildet, daß etwa die mittlere Hälfte des von der Frontscheibe abgelenkten Fahrwindes nach oben durch den Luftkanal entweicht, während die andere Hälfte des Luftstromes durch die mehr nach hinten geneigten Außenseiten der Scheibe zu je einem Viertel nach außen abgelenkt wird.

Heckseitig ist nun auf dem doppelwandigen Dach des SiPKW's ein weiterer Dachspoiler vorgesehen, über den der Fahrwind ebenfalls nach oben abgelenkt wird, so daß auch dadurch die Bodenhaftung des Fahrzeuges mit zunehmender Fahrgeschwindigkeit erhöht wird. Vorrangig hat dieser Dachspoiler jedoch die Aufgabe, über bereits vorgesehenen Längsschlitzen, die zum Auffangen von Regenwasser für die Bewässerung der Heckscheibe in einem Dachdeckel vorgesehen sind, eine gewisse Sogwirkung bzw. einen gewissen Unterdruck zu erzeugen (vgl. DE-A-37 25 591).

Durch die unmittelbar hinter diesem Dachspoiler angeordneten Längsschlitze wird also mittels des vom Fahrwind erzeugten Unterdruckes Luft aus dem doppelwandigen Dach nach oben abgesaugt, so daß auf der Vorderseite des Daches unter bereits vorgesehenen Längsschlitzen in der Dachdecke ebenfalls ein gewisser Unterdruck entsteht (vgl. DE-A-37 25 591).

Durch diese Längsschlitze, welche zum Auffangen von Regenwasser für die Bewässerung der Frontscheibe vorgesehen sind, strömt also nun aufgrund des im doppelwandigen Dach erzeugten Unterdruckes etwas Luft unmittelbar hinter dem Luftkanal, wo ein gewisser Überdruck entsteht, in das doppelwandige Dach ein und durch die heckseitig in der Dachdecke angebrachten Längsschlitze wieder aus, so daß während der Fahrt ein ständiger Luftdurchzug durch das doppelwandige Dach hindurch gewährleistet und eine Hitzeentwicklung im Fahrzeuginnenraum durch Sonnenbestrahlung optimal unterbunden ist, zumal auch die Frontscheibe und die Heckscheibe überdacht sind.

Auch ist das doppelwandige Dach samt Vordach seitlich etwas über die Seitenfenster hinausgezogen, so daß das lästige Abkratzen der Ausblickscheiben bei Schneeregen um die Gefriertemperatur herum praktisch ganz entfällt und auch keine Enteisungsmittel mit umweltschädlichen Treibgasen mehr erforderlich sind.

Damit verbrauchte Luft aus dem Fahrzeuginnenraum abgesaugt wird und kein Sauerstoffmangel entsteht, sind im Dachboden beidseits übliche, im Durchgangsquerschnitt evtl. einstellbare Entlüftungsschlitze in etwas nach oben gezogenen Ausbeulungen des Dachbodens angebracht.

Dabei wird der Fahrzeuginnenraum über eine relativ preisgünstige Belüftungsanlage, die im heckseitigen Antriebsraum untergebracht ist, stets mit gereinigter und gegebenenfalls vorgewärmter Frischluft versorgt.

Für die Abdeckung der Regenwasser-Auffangwannen sind in dargestelltem Ausführungsbeispiel zweckmäßigerweise separate Dachdekkel vorgesehen.

Das doppelwandige Vordach ist über eine nach hinten verlängerte Dachdecke auf dem Dachboden bzw. auf den oberen Holmen der Türrahmen, sowie an einem Überrollbügel festgeschraubt und bildet zusammen mit einem Dachdeckel für die Abdeckung der Auffangwanne für die Frontscheibe gleichzeitig den vorderen Teil der Dachdecke über dem Fahrzeuginnenraum, während der hintere Teil der Dachdecke durch einen ebenfalls auf den oberen Holmen der Türrahmen befestigten Dachrahmen, sowie durch einen nach vorne aufklappbaren hinteren Dachdeckel, der schwenkbar am Überrollbügel gelagert ist, gebildet ist. Dabei ist der über die Heckscheibe hinausgezogene Dachrahmen auf der Rückseite am nach hinten verlängerten Teil des Dachbodens, der zu einer Auffangwanne für die Heckscheibe ausgebildet ist, zusätzlich befestigt. Vor der Auffangwanne für die Heckscheibe ist im hinteren Dachdeckel der erwähnte Dachspoiler angeformt.

Von Vorteil ist diese Dachausbildung auch für Frontlenker, insbesondere Omnibusse, wo dem Fahrer das sonst übliche Abkratzen vereister Scheiben im Winter erspart bleibt.

Ein Wischbügel für die Heckscheibe kann aufgrund des über die Heckscheibe hinweggezogenen doppelwandigen Daches evtl. entfallen, wobei hier abr trotzdem eine Auffangwanne für Regenwasser vorgesehen ist, damit auch die Heckscheibe sauber gewaschen wird, wenn das Fahrzeug bei Regen im Freien abgestellt ist.

Damit auch die Seitenfenster bei Regen etwas sauber gewaschen werden, sind auf den Außenseiten der vom Vordach und vom Dachrahmen gebildeten Dachdeckenpartie ebenfalls Schlitze angebracht, durch die hindurch es auf die seitlich überstehenden, vom Vordach und vom Dachrahmen gebildeten Randzonen des Dachbodens hindurchregnen kann. Dabei sind die Randzonen etwas nach unten gezogen, so daß seitliche Rinnen gebildet sind, von denen aus das aufgefangene Regenwasser durch Ablauflöcher hindurch auf die Seitenfenster abtropft. Dabie weist der Dachboden nach außen zu den seitlichen Rinnen hin ein Gefälle auf, das aber in der Darstellung nicht berücksichtigt ist. Auch eine übliche Wölbung der Dachdecke ist hier nicht dargestellt.

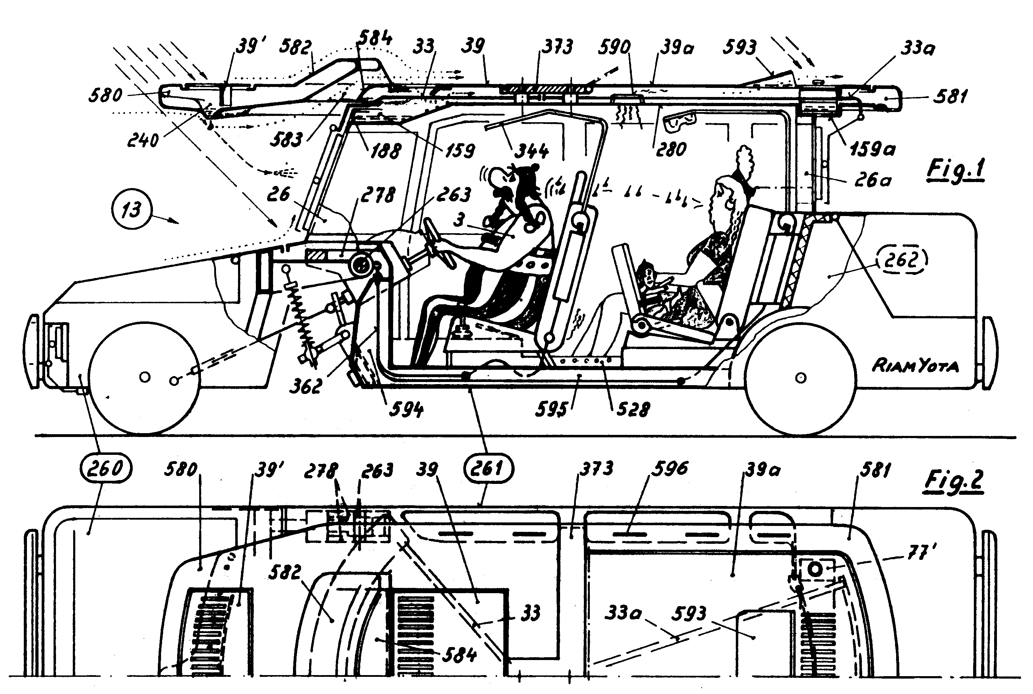

In den Darstellungen Fig.1 - 5 ist ein SiPKW mit einem zwischen Vordach und Dach gebildeten Luftkanal 583, vor dem ein Vordachspoiler 582 auf der Oberseite eines Vordaches angeformt ist, aufgezeigt. Dabei ist sowohl das Vordach, als auch das Dach doppelwandig ausgebildet (siehe Fig.1).

Der gegen die Innenseite einer kegelförmig gewölbten Frontscheibe 26 gerichtete Fahrwind wird hier nach oben durch den Luftkanal abgeleitet, wo sich der Luftstrom mit dem über den Vordachspoiler hinwegströmenden Fahrwind vermischt und über das Dach hinwegzieht.

Ein Teil des durch punktierte Linien angedeuteten Luftstromes dringt dabei hinter dem Luftkanal durch die Längsschlitze eines frontseitigen Dachdeckels 39 (siehe Fig.2) in das doppelwandige Dach ein und heckseitig hinter einem Dachspoiler 593, wo ein gewisser Unterdruck durch den über den Spoiler hinwegströmenden Fahrwind erzeugt wird, wieder aus.

Die strichlierten Linien versinnbildlichen hier einen heftigen, entsprechend der Fahrgeschwindigkeit mehr oder weniger schräg gerichteten Regen, der in den Wannen 240, 159 und 159a für die Bewässerung der Frontscheibe und der Heckscheibe 26a aufgefangen wird.

Für die Entlüftung des Fahrzeuginnenraumes sind seitlich im Dachboden 280 zwei nach oben gerichtete Ausbeulungen 590 mit im Querschnitt einstellbaren Längsschlitzen oder dgl. vorgesehen, wobei Frischluft durch ein vom Innenraum nach hinten in den Antriebsraum 262 hindurchgeführtes Tunnel 528 hindurch nach vorne in den Innenraum zugeführt wird.

Fig.1 zeigt einen SiPKW 13 mit einem zwischen einem doppelwandigen Vordach und einem doppelwandigen Dach gebildeten Luftkanal 583.

Fig.2 zeigt einen SiPKW in Draufsicht mit Dachdeckeln 39', 39 u. 39a für eine etwa jährlich erforderliche Reinigung der Auffangwannen 240, 159 und 159a für Regenwasser (siehe Fig.1).

Fig.3 zeigt im Längsschnitt ein Vordach 580 und einen Dachrahmen 581 jeweils ohne die dazugehörigen Dachdeckel.

Fig.4 zeigt in Draufsicht ein Vordach 580 und einen Dachrahmen 581 jeweils ohne die dazugehörigen Dachdeckel.

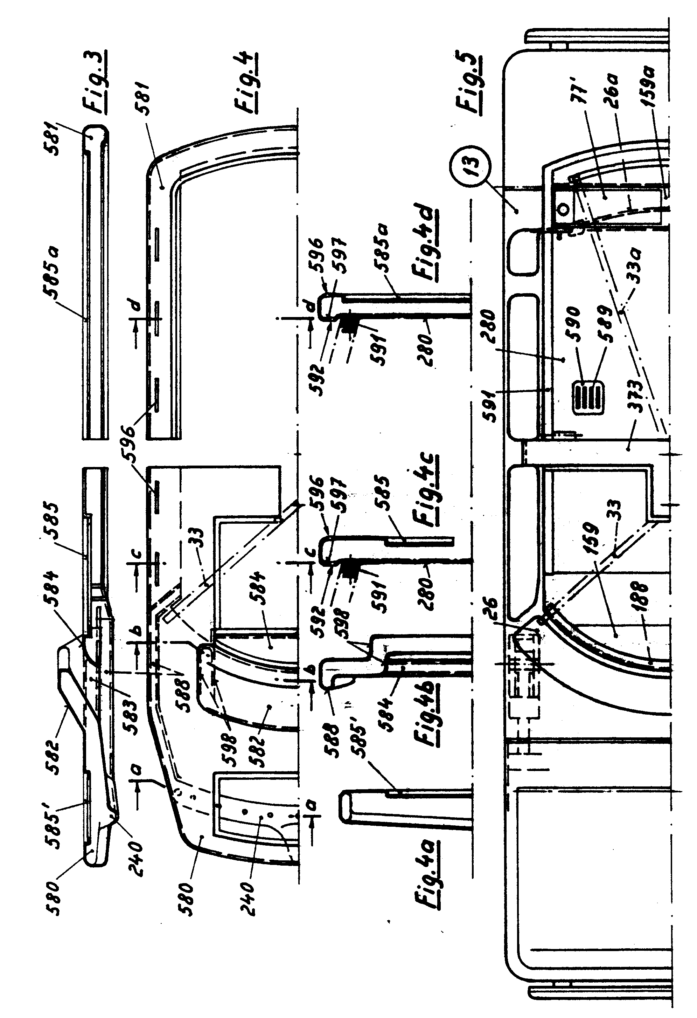

Entsprechend Schnitt a-a, b-b, c-c und d-d zu Fig.4 ist in den Figuren 4a, 4b und 4c ein Vordach und in Fig.4d ein Dachrahmen jeweils im Querschnitt dargestellt.

Fig.5 zeigt einen SiPKW in Draufsicht ohne Überdach 580, 581 mit dazugehörigen Dachdeckeln bzw. ohne Vordach, Dachrahmen und Dachdeckel.

Fig.1 zeigt einen SiPKW 13 mit einem doppelwandigen Vordach 580 mit Vordachdeckel 39', wobei das Vordach über eine nach hinten verlängerte Dachdecke auf den oberen Holmen 591 der Türrahmen (siehe Fig.4c), sowie an einem Überrollbügel 373 (siehe Fig.2) festgeschraubt ist und oberhalb eines nach unten abgekröpften Wischbügels 33 für die Frontscheibe eine Abweisblende 584 aufweist.

Die Abweisblende bildet hier die vordere Stirnkante des doppelwandigen Daches und ist einer kegelförmig gewölbten Frontscheibe 26 bzw. einer die äußere Begrenzung einer Auffangwanne 159 bildenden Außenwandung 188 angepaßt, die ihrerseits eine der Frontscheibe entsprechende Wölbung aufweist.

Zwischen der Außenwandung der Auffangwanne und der Abweisblende ist ein quer verlaufender Schlitz für die horizontale Durchführung des Wischbügels nach außen gebildet, wobei der Wischbügel 33 für die Frontscheibe knapp hinter der Außenwandung eine weitere Kröpfung nach unten aufweist.

Die in der Außenwandung der Auffangwanne vorgesehenen Ablauflöcher für die Bewässerung der Frontscheibe sind hier horizontal angebracht und zwar von innen nach außen in ansteigender Höhe, so daß die äußeren Partien der Scheibe erst bei ansteigendem Wasserspiegel bewässert werden.

Die innere Wandung der Auffangwanne, die hier auch teilweise den Wannenboden bildet, ist eben ausgebildet und flach nach hinten zum Dachboden 280 hochgezogen, so daß die über der Wanne in einem vorderen Dachdeckel 39 angebrachten Längsschlitze ausreichend lang dimensioniert werden können, ohne daß eindringende Regentropfen direkt auf den hochgezogenen Teil des Dachbodens auftropfen.

Vor der Abweisblende ist nun ein kegelförmig um die Frontscheibe herumgezogener, ebenfalls doppelwandig ausgebildeter Vordachspoiler 582 auf dem oben bündig zur Dachdecke verlaufenden Vordach angeformt, so daß zwischen dem Vordachspoiler und der ebenfalls oben bündig zur Dachdecke abschließenden Abweisblende ein Luftkanal gebildet ist, der in seiner Breite in etwa der halben Breite der Frontscheibe entspricht und seitlich jeweils durch eine in Längsrichtung des Fahrzeuges verlaufende doppelwandig ausgebildete Wandung 598 begrenzt ist (siehe Fig.4).

Dabei ist die Abweisblende 584 in ihrer Breite der Breite des Luftkanals 583 angepaßt und an den inneren Wänden der doppelwandig ausgebildeten Seitenwandungen des Luftkanals festgeschweißt.

Über einer im vorderen Teil des Vordachbodens eingeformten Wanne 240, die während der Fahrt für eine zusätzliche Bewässerung der Frontscheibe mehr im unteren Bereich sorgt, ist eine Öffnung in der Decke des Vordaches zwecks Reinigung der Wanne vorgesehen, wobei in den nach unten abgekröpften Rahmen 585' der Öffnung (siehe Fig.3) ein Vordachdeckel 39' mit Längsschlitzen eingesetzt ist, so daß es in die Wanne auch hineinregnen kann.

Ein entsprechend ausgebildeter Rahmen 585 (siehe Fig.3) ist auch für den vorderen Dachdeckel 39 über der Frontscheibe im Vordach bzw. in der nach hinten verlängerten Dachdecke des Vordaches eingeformt, wobei dieser Rahmen teilweise durch die nach unten abgekröpfte Abweisblende 584 und teilweise durch eine am Überrollbügel auf dessen Vorderseite vorgesehen, nach unten abgesetzte Schulter gebildet ist, die auf der Innen- und Rückseite der zurückgezogehen Vordachdecke auch als Auflage für das Vordach und für dessen Befestigung dient (siehe Fig.4 und 5).

Für die Abdeckung der zur Bewässerung der Heckscheibe 26a vorgesehenen Auffangwanne 159a ist ein nach vorne hochschwenkbar am Überrollbügel 373 gelagerter hinterer Dachdeckel 39a vorgesehen, der auch einen beifahrerseitig angeordneten Wasserbehälter 77' (siehe Fig.2) sowie einen fahrerseitig angeordneten Getriebemotor für den Antrieb der bieden Wischbügel 33 und 33a überdacht, wobei der Wasserbehälter und der hier nicht dargestellte Getriebemotor in der Auffangwanne untergebracht sind.

In den hinteren Dachdeckel ist vor der heckseitigen Auffangwanne ein schräg nach hinten hochgezogener Dachspoiler 593 eingeformt, hinter dem ebenfalls Längsschlitze im Deckel angebracht sind, damit es in die Auffangwanne auch hineinregnen kann.

Für die Auflage des hinteren Dachdeckels ist ein über die Heckscheibe hinausgezogener Dachrahmen 581 vorgesehen, der gleichzeitig die seitlichen Wandungen des doppelwandigen Daches bildet, wobei der vordere Teil der seitlichen Wandungen durch das Vordach gebildet ist (siehe Fig.4c und 4d).

Für die Auflage des hinteren Dachdeckels ist auf der Innenseite des Dachrahmens ringsum ein nach unten abgekröpfter Rahmen 585a eingeformt (siehe Fig.3).

Im Dachboden 280 sind hier hinter den Vordersitzen bzw. hinter der Auspuffanlage des Fahrers 3 seitlich zwei Ausbeulungen 590 nach oben mit im Querschnitt einstellbaren Entlüftungsschlitzen eingeformt, durch die hindurch verbrauchte bzw. unbrauchbare Luft abgesaugt wird, die dann hinter dem Dachspoiler 593 aus dem doppelwandigen Dach austritt, so daß über ein Tunnel 528, in dem auch das Schaltgestänge für das heckseitig angeordnete Getriebe untergebracht ist, ständig frische Luft in den Fahrzeuginnenraum eingesogen wird.

Die jeweils seitlich des Fahrzeuges angeordneten beiden Lagerstege 278 für die Lagerung der beiden Achsbolzen 263 bzw. für die Lagerung des abschwenkbar um die Achsbolzen gelagerten Fahrzeugvorderteiles 260 sind hier vertikal nach unten gezogen und durch Querwände auf der Vorder- und Rückseite versteift, so daß jeweils eine Vertikalstütze 594 gebildet ist, die im Querschnitt kastenförmig ausgebildet und mit einer seitlichen Türschwelle 595 zu einer Einheit verschweißt oder verschraubt ist.

Dabei sind die Bowdenzüge 362 für das Auslösen der vorgesehenen Schutzbügel jeweils durch den Hohlraum einer Vertikalstütze bzw. einer im Querschnitt ebenfalls kastenförmig ausgebildeten Türschwelle hindurchgeführt.

Die ausreichend stabil ausgebildeten Türschwellen, sowie die ausreichend stabil ausgebildeten Vertikalstützen weisen auf der Innenseite entsprechende durch Deckel abgedeckte Öffnungen auf, damit man die Bowdenzüge einziehen kann.

Für die Befestigung der Bowdenzüge ist jeweils unterhalb der Achsbolzen eine horizontal angeordnete Lagerplatte zwischen den Lagestegen 278 vorgesehen, wobei für die Abdeckung dieser Partie eine abnehmbare Verkleidung vorgesehen ist, die auf der dem Fahrzeuginnenraum zugewandten Seite jeweils um einen Achsbolzen herumgezogen ist, so daß eine einwandfreie Montage ermöglicht ist.

Fig.2 zeigt einen entsprechend Fig.1 ausgebildeten SiPKW 13 in Draufsicht mit einem kompletten Überdach, dessen vorderer Teil durch ein Vordach 580 gebildet ist, das bis zu einem Überrollbügel 373 hin auch den vorderen Teil des Dachbodens 280 mit überdeckt. Der im Dachteil des Vordaches eingesetzte vordere Dachdeckel 39 für die Abdeckung der Auffangwanne 159 (siehe Fig.1) entspricht in seiner Breite der Breite der Abweisblende 584 bzw. des Luftkanales, der durch den hochgezogenen Vordachspoiler 582 soweit überdacht ist, daß die Frontscheibe vor Schneefall geschützt ist (siehe Fig.1).

Der Vordachdeckel 39' für die im Vordachboden eingeformte Wanne 240 ist hier gleich breit ausgeführt wie der vordere Dachdeckel 39, während der hintere Dachdeckel 39a für die heckseitige Auffangwanne in etwa so breit ausgebildet ist wie der Dachboden 280, was in Fig.4d durch die für den Deckel vorgesehene, vom Rahmen 585a gebildete Öffnung im Dachrahmen 581 veranschaulicht ist. Die an den seitlichen Randzonen in der Dachdecke angebrachten Längsschlitze 596 sind für die Bewässerung der Seitenfenster vorgesehen (siehe Fig.4c u. 4d).

Dabei wird das Regenwasser seitlich vom Fahrzeuginnenraum in Rinnen 597 aufgefangen, von wo aus es dann abtropft.

Fig.3 zeigt im Längsschnitt ein zweiteilig ausgebildetes Überdach 580,581, das mit hier nicht dargestellten Dachdeckeln ein doppelwandiges Vordach, sowie eine Dachdecke über dem Dachboden 280 eines in Fig.5 ohne Überdach dargestellten SiPKW's bildet. Zwischen den beiden Hälften des Überdaches ist ein Überrollbügel 373 wie üblich seitlich an den oberen Holmen der Türrahmen befestigt, wobei der Überrollbügel oben und seitlich bündig dem Überdach angepaßt ist.

Die im Deckenteil des Vordaches 580 und des Dachrahmens 581 eingeformten, nach unten abgekröpften Rahmen 585',585 und 585a für die Auflage der vorgesehenen Dachdeckel sind in ihrer Tiefe so bemessen, daß die Deckel oben bündig mit der Dachdecke abschliessen.

Fig.4 zeigt entsprechend Fig.3 ein Überdach 580,581 in Draufsicht ohne die dazugehörigen Dachdeckel.

Für die Bewässerung der Seitenfenster sind auf den seitlich über den Dachboden hinausragenden Randpartien des Überdaches Längsschlitze 596 in der Dachdecke angebracht, durch die as hindurchregnen kann.

Dabei ist die Dachdeckel jeweils seitlich nach unten und entsprechend einer gewählten Höhe des doppelwandigen Daches auf der Unterseite nach innen abgewinkelt (siehe Fig.4c u.4d), so daß die äußeren Randpartien des Überdaches im Dachbereich eine U- förmigen Querschnitt aufweisen, was auch für den hinteren, über den Dachboden hinausragenden Teil des Dachrahmens 581 zutrifft.

Das durch die Längsschlitze 596 in das überstehende doppelwandige Dach eingedrungene Regenwasser sammelt sich nun in seitlichen Rinnen 597, die dadurch gebildet sind, indem die nach innen abgewinkelten Schenkel der seitlichen Randpartien über den oberen Holmen 591 der Türrahmen etwas nach oben abgekröpft sind.

Durch Ablauflöcher 592 hindurch tropft nun das Regenwasser von den Rinnen aus auf die Seitenfenster und wäscht dieselben sauber. Dabei sind die Seitenfenster vor Schneefall weitgehendst geschützt, wodurch auch das lästige Eindringen von Schnee in den Fahrzeuginnenraum beim Öffnen einer Türe durch vom Dach herabfallende Schneemassen eingeschränkt bzw. unterbunden ist.

Da das Dach bei einem SiPKW auch aus Sicherheitsgründen vorzugsweise in bequemer Einstieghöhe angeordnet ist, so daß auch behinderte Personen beim Einsteigen in einen als Taxi genutzten SiPKW keine Hilfe benötigen, dürften die etwas nach außen gezogenen Randpartien des Daches beim Einsteigen kaum nachteilig ins Gewicht fallen, wenn sie, wie in Fig.2 dargestellt, noch innerhalb der Fahrzeugbreite liegen.

Das Vordach ist seitlich jeweils durch eine nach unten gezogene, doppelwandige Umrandung 588 begrenzt bzw. versteift, wobei die Umrandung außen bündig mit dem Dachrand abschließt und vorne schräg zur Wanne 240 hin nach innen verläuft, während sie hinten, hinter dem in seiner Endschwenkstellung dargestellten Wischbügel 33 nach innen gezogen, mit ihrer unteren Stirnseite auf die schräg nach hinten hochgezogenen Innenwandung der Auffangwanne 159 (siehe Fig.5) aufläuft, wo sie zur zusätzlichen Befestigung des Vordaches dient.

In Fig.4a ist gemäß Schnitt a-a zu Fig.4 eine Wanne 240 mit ihren Ablauflöchern im Querschnitt dargestellt. Der Wannengrund weist von außen nach innen ein Gefälle auf, so daß äußeren Partien der Frontscheibe erst bei ansteigendem Wasserspiegel bewässert werden.

In Fig.4b ist gemäß Schnitt b-b zu Fig.4 ein doppelwandig ausgebildeter Vordachspoiler mit seinen doppelwandig ausgebildeten, in Längsrichtung verlaufenden seitlichen Wandungen 598 aufgezeigt. Eine Stirnblende 584, die zusammen mit dem Vordachspoiler einen über der Frontscheibe angeordneten Luftkanal 583 bildet, ist unten bündig zum Vordachboden zwischen den inneren Wänden dieser seitlichen Wandungen eingepaßt und festgeschweißt. Der seitliche Abschluß des Vordaches ist jeweils durch eine nach unten gezogene, doppelwandig ausgebildete Umrandung 588 gebildet, die hinten über der vorderen Dachstütze (siehe Fig.5) etwa in derselben Schräglage nach innen gezogen und mit ihrer unteren, schräg nach oben verlaufenden Stirnseite auf der Innenwandung der Auffangwanne 150 befestigt ist.

In Fig. 4c ist gemäß Schnitt c-c zu Fig.4 die auf den oberen Holmen 591 der Türrahmen befestigte bzw. festgeschraubte Partie der zurückgezogenen Vordachdecke im Querschnitt dargestellt. Ein Dachboden 280 weist von innen nach außen ein hier nicht dargestelltes Gefälle auf, so daß auf den Dachboden gelangtes Spritzwasser nach außen in die Rinnen 597 läuft und von dort aus durch mehrere in den Rinnen angebrachte Ablauflöcher hindurch nach unten auf die Seitenfenster abtropft.

In Fig.4d ist gemäß Schnitt d-d zu Fig.4 ein Dachrahmen 581 im Querschnitt dargestellt. Die Ausbildung der Randpartie entspricht der des Vordaches über dem Dachboden, wobei hier lediglich ein breiterer Rahmen 585a für die Auflage des hinteren Dachdeckels vorgesehen ist.

Fig.5 zeigt einen SiPKW in Draufsicht ohne Überdach mit den dazugehörigen Dachdeckeln bzw. ohne Vordach, Dachrahmen und Dachdeckel.

Der Überrollbügel 373 weist in der Fahrzeugmitte eine nach vorne abstehenden Lagerflansch auf, so daß für beide Wischbügel 33 und 33a eine Möglichkeit für deren Lagerung gebildet ist. Dabei ist die Lagerung im Detail nicht dargestellt bzw. Spezialisten für die Lagerung von Wischbügeln überlassen.

Im Interesse einer möglichst geringen Bauhöhe des doppelwandigen Daches dürfte es zweckmäßig sein, vorgesehene, hier nicht dargestellte Lagereinsätze etwas über die Oberkante der Dachdecke hinauszuziehen, wodurch der Luftwiderstandswert kaum verschlechtert wird.

Die der Wölbung der Frontscheibe 26 angepaßte Außenwandung 188 der Auffangwanne 159 ist seitlich nach außen gezogen, wo durch die nach innen gezogene Umrandung 588 des Vordaches (siehe Fig.4) ein seitlicher Abschluß gebildet ist und wo durch etwas größer ausgebildete, nach vorne gerichtete Ablauflöcher in der Außenwandung ein Abfluß von überschüssigem Regenwasser ermöglicht ist. Dabei sollten die Ablauflöcher so dimensioniert sein, daß auch bei einem Wolkenbruch kein Wasser über die Außenwandung hinwegläuft und die Durchsicht durch die Frontscheibe unnötig verschlechtert. Statt zweier Ablauflöcher auf den Außenseiten kann ein seitlicher Abfluß auch dadurch ermöglicht werden, indem auf der Oberseite der Außenwandung seitlich nach unten gezogene Mulden eingeformt sind, so daß überschüssiges Regenwasser seitlich über die Mulden hinwegläuft.

Der über die Heckscheibe 26a hinausgezogene Teil des Dachbodens 280 ist zu einer Auffangwanne 159a ausgebildet, die in der Draufsicht gesehen rechteckig ausgebildet und seitlich bis zu den oberen Holmen 591 der Türrahmen hinausgezogen ist.

Dabei sind die Holme ebenfalls über die Heckscheibe hinweggezogen, wo sie mit dem hinter der Auffangwanne wieder hochgezogenen, nach hinten verlängerten Ende des Dachbodens einen gemeinsamen Abschluß bilden und wo der verlängerte Dachboden heckseitig mit dem Dachrahmen verschraubt ist (siehe Fig.1).

Für die vertikale Durchführung des Wischbügels 33a für die Heckscheibe ist im hinter der Auffangwanne wieder hochgezogenen Teil des Dachbodens ein Schlitz entsprechend dem Schwenkradius des Wischbügels angebracht.

Die Innenwand der heckseitigen Auffangwanne bildet über der Heckscheibe auch gleichzeitig den oberen Teil der den Fahrzeuginnenraum begrenzenden Rückwand (siehe Fig.1).

Der in der Auffangwanne untergebrachte Wasserbehälter 77′ ist möglichst groß ausgebildet und weist seitlich einen Einfüllstutzen auf, der durch den hinteren Dackdeckel hindurchragt (siehe Fig.2).

Die im Dachboden vorgesehenen Ausbeulungen 590 mit den Entlüftungsschlitzen 589 sind außerhalb vom Schwenkbereich des heckseitigen Wischbügels angeordnet, so daß sie ausreichend hoch in das doppelwandige Dach hineingezogen werden können und kein Spritz- oder Schwitzwasser in den Fahrzeuginnenraum abtropft.

**Patentansprüche**

1. Sicherheitsautomobil mit einem zwischen Dach und Vordach gebildeten Luftkanal, der ein Ausweichen eines gegen die Frontscheibe des Automobiles gerichteten Luftstromes nach oben über das Dach hinweg ermöglicht, wobei das Vordach ein über die Frontscheibe hinaus auskragendes Fahrzeugteil bildet und wobei zumindest über der Frontscheibe eine Auffangwanne für Regenwasser in einem Dachboden eines doppelwandigen Daches eingeformt ist, **dadurch gekennzeichnet,** daß vor einem doppelwandig ausgebildeten Dach eines Sicherheitsautomobiles (13) ein die Verlängerung des Daches bildendes, oben bündig zur Dachdecke ausgerichtetes doppelwandig ausgebildetes Vordach (580) befestigt ist, wobei ein schräg nach hinten hochgezogenes, als Vordachspoiler (582) ausgebildetes Vordachteil einen Luftkanal (583) zwischen dem Dach und dem Vordach bildet.

2. Sicherheitsautomobil nach Anspruch 1 **dadurch gekennzeichnet,** daß der Luftkanal (583) zwischen einer, die vordere Stirnkante des doppelwandigen Daches bildenden Abweisblende (584) und dem schräg nach hinten hochgezogenen Vordachspoiler (582) gebildet ist und daß für die seitliche Begrenzung des Luftkanales beidseits in Längsrichtung verlaufende Wandungen (598) am Vordach angeformt sind, wobei die in üblicher Weise der Wölbung einer Frontscheibe (26) angepaßte Abweisblende zwischen den seitlichen Wandungen des Luftkanales befestigt ist.

3. Sicherheitsautomobil nach Anspruch 1 und 2 **dadurch gekennzeichnet,** daß der am doppelwandigen Vordach (580) angeformte Vordachspoiler (582), sowie die in Längsrichtung verlaufenden seitlichen Wandungen (598) des Luftkanales (583) ebenfalls doppelwandig ausgebildet sind und daß der Vordachspoiler kegelförmig um die Frontscheibe (26) herumgezogen ist.

4. Sicherheitsautomobil nach Anspruch 1 und 2 **dadurch gekennzeichnet,** daß das Vordach (580) lediglich vor einer, der Frontscheibe (26) angepaßten Außenwandung (188) einer Auffangwanne (159), die für die Bewässerung der Frontscheibe ausgebildet ist, doppelwandig ausgebildet und mit einem mit Längsschlitzen versehenen Vordachdeckel (39') oberhalb einer zusätzlichen, vorderseitig in einem Vordachboden eingeformten Wanne (240) ausgestattet ist, wobei diese Wanne für die Bewässerung der Frontscheibe während der Fahrt ausgebildet ist, und daß das Vordach mit seinen Außenseiten über den Dachboden (280) des Fahrzeuginnenraumes (261) hinausgezogen ist, so daß es den Schwenkbereich eines für die Frontscheibe vorgesehenen Wischbügels (33) überdeckt, und daß die Außenseiten des Vordaches nach unten gezogene doppelwandige Umrandungen (588) aufweisen, wobei die Umrandungen unmittelbar hinter dem Schwenkbereich des Wischbügels nach innen gezogen sind und mit ihren unteren Stirnseiten auf dem Dachboden, der hier im vorderen Bereich zu einer schräg nach hinten hochgezogenen, eben ausgebildeten Innenwandung für die Auffangwanne (159) oberhalb der Frontscheibe ausgebildet ist, befestigt sind, während die stirnseitige Außenwandung (188) dieser Auffangwanne unterhalb der Abweisblende (584) und dem Vordachboden zusammen mit denselben einen quer verlaufenden Schlitz für die horizontale Durchführung des in diesem Bereich nach unten abgekröpften Wischbügels bildet.

5. Sicherheitsautomobil nach Anspruch 4 **dadurch gekennzeichnet,** daß das doppelwandige Vordach (580) seitlich des Luftkanales (583) eine nach hinten verlängerte Dachdecke aufweist und daß diese Dachdecke einen mit Längsschlitzen versehenen vorderen Dachdeckel (39) oberhalb der Auffangwanne (159) über der Frontscheibe (26) aufweist und zusammen mit dem Dachboden (280) bis zu einem an üblicher Stelle angeordneten Überrollbügel (373) hin den vorderen Teil des doppelwandigen Daches bildet, wobei die zurückgezogene Dachdecke des Vordaches außen bündig mit dem doppelwandigen Vordach und dem Überrollbügel nach unten gezogen und entsprechend einer vorgesehenen Höhe des doppelwandigen Daches nach innen abgewinkelt ist, so daß durch die nach unten abgewinkelten Schenkel der Dachdecke die vorderen Außenwände des doppelwandigen Daches und durch die nach innen abgewinkelten Schenkel der Dachdecke beidseite nach außen über den Fahrzeuginnenraum (261) hinausragende Randpartien im Anschluß an den Dachboden (280) über dem Fahrzeuginnenraum gebildet sind.

6.  Sicherheitsautomobil nach Anspruch 5
    **dadurch gekennzeichnet,**
    daß der hinter dem Überrollbügel (373) vorgesehene Teil der Dachdecke durch einen schwenkbar am Überrollbügel gelagerten hinteren Dachdeckel (39a) und durch einen für die Auflage dieses Deckels ausgebildeten Dachrahmen (581) gebildet ist und daß der Dachrahmen außen bündig der zurückgezogenen Vordachdecke angepaßt bzw. auf den Außenseiten genau gleich profiliert ausgebildet ist wie die Dachpartie des Vordaches, wobei der Dachrahmen hinten über eine Heckscheibe (26a) hinausgezogen ist, wo er hinter einer rückseitig der Heckscheibe angeordneten, in einem verlängerten Dachbodenteil eingeformten Auffangwanne (159a), die für die Bewässerung der Heckscheibe ausgebildet ist, zusammen mit diesem Dachbodenteil den hinteren Abschluß des über die Heckscheibe hinausgezogenen doppelwandigen Daches bildet.

7.  Sicherheitsautomobil nach Anspruch 5 und 6
    **dadurch gekennzeichnet,**
    daß in die nach innen abgewinkelten unteren Schenkel der über den Fahrzeuginnenraum (261) hinausgezogenen Randpartien der zurückgezogenen Vordachdecke und des Dachrahmens (581) ringsum nach unten gezogene Rinnen (597) eingeformt sind und daß in den Rinnen Ablauflöcher (592) für Regenwasser vorgesehen sind, wobei in den äußeren Randpartien der Dachdecke Längsschlitze (596) über den Rinnen angebracht sind, so daß es durch die Schlitze hindurch in die Rinnen hineinregnen kann.

8.  Sicherheitsautomobil nach Anspruch 6
    **dadurch gekennzeichnet,**
    daß im schwenkbar am Überrollbügel (373) gelagerten hinteren Dachdeckel (39a) oberhalb der Auffangwanne (159a) für die Heckscheibe (26a) Längsschlitze angebracht sind und daß vor diesen Schlitzen ein schräg nach hinten hochgezogener Dachspoiler (593) im hinteren Dachdeckel eingeformt ist.

**Claims**

1.  **Security motor vehicle** with an air funnel formed between roof and canopy hood (or protruding roof) that makes it possible for an air current directed towards the windshield to escape over the roof with the canopy hood forming a part of the vehicle that protrudes over the windshield and a collecting basin for rainwater being moulded into the double-walled bottom of the roof at least above the windshield,
    **characterised by the fact**
    **that**
    a double-walled canopy hood **(580)**, the top of which is flush with the top of the roof, forms the extension at the front of the double-walled roof of a security motor vehicle **(13)** with an air funnel **(583)** being formed between roof and canopy hood by a part of the canopy hood which is hoisted up towards the back at an angle so as to form a canopy spoiler **(582)**.

2.  Security motor vehicle according to **claim 1**
    **characterised by the fact**
    **that**
    the air funnel (583) is formed between the front edge of the double-walled roof, which has the function of a front deflecting screen **(584)**, and the canopy spoiler **(582)** hoisted up towards the back and that longitudinal side walls **(598)** are attached to the canopy hood at both sides of the air funnel as side limitations with the deflecting screen, that is adapted in the usual manner to the convexity (or curbing) of the windshield **(26)**, being fixed between the side walls of the air funnel.

3.  Security motor vehicle according to **claims 1 and 2**
    **characterised by the fact**
    **that**
    the canopy spoiler **(582)** mounted at the canopy hood **(580)** as well as the longitudinal side walls **(598)** of the air funnel **(583)** are double-walled as well and that the canopy spoiler is drawn around the windshield in the shape of a cone **(26)**.

4.  Security motor vehicle according to **claims 1 and 2**
    **characterised by the fact**

that
the canopy hood **(580)** is double-walled only in front of the outer wall **(188)** of a collecting basin **(159)**, that serves the purpose of watering the windshield **(26)**, and that it is equipped with a top cover of the canopy **(39')** with longitudinal slots above an additional basin **(240)** moulded in a canopy bottom at the front of the canopy hood and with this basin being shaped so as to water the windshield of the moving car. The outer sides of the canopy are drawn out so that they project from the roof bottom **(280)** of the interior of the vehicle **(261)** so that the former spreads over the swivelling range of a wiper arm **(33)** for the windshield. The outer sides of the canopy have double-walled bordering edges **(588)** which are drawn downwards with these edges being drawn inwards immediately behind the swivelling range of the wiper arm and with their lower front parts being fixed to the bottom of the roof. The front of this bottom of the roof is shaped so as to form a level inner wall for the collecting basin **(159)** which is hoisted up towards the back at an angle. The outer wall **(188)** at the front of this collecting basin below both the deflecting screen **(584)** and the bottom of the canopy forms a transverse slot with these two parts so that the wiper arm, that is bent downwards at right angle at this point, can be passed through horizontally.

5. Security motor vehicle according to **claim 3** **characterised by the fact** **that** the double-walled canopy hood **(580)** has a roof top which is extended towards the back on both sides of the air funnel **(583)** and that this roof top includes a front top cover of the roof **(39)** with longitudinal slots being mounted above the collecting basin **(159)** over the windshield **(26)** and that, together with the roof bottom **(280)** and including a roll bar **(373)** which is mounted in the usual manner, it forms the front part of the double-walled roof with the withdrawn top of the canopy hood being drawn downwards and the outside of it being flush with the double-walled canopy hood and the roll bar. Furthermore, it is angled towards the inside according to the planned height of the double-walled roof so that the lower legs of the roof top, which are angled downwards, form the front outer walls of the double-walled roof and so that fringes (or marginal sections) which protrude over the interior of the vehicle **(261)** and that are directly connected with the bottom of the roof **(280)** are formed above the interior of the vehicle by the legs of the roof top that are angled inwards.

6. Security motor vehicle according to **claim 5** **characterised by the fact** **that** the part of the roof top that is situated immediately behind the roll bar **(373)** is formed by a rear roof cover **(39a)** that is swivel-mounted at the roll bar and by a roof frame **(581)** shaped so as to act as a support for this top cover and that the outside of the roof frame is flush with the withdrawn top of the canopy and that it has exactly the same profile as the top section of the canopy. The roof frame is extended to the back beyond a rear window **(26a)** and, together with a collecting basin **(159a)** which serves the purpose of watering of the rear window and is mounted behind the rear window in an extended part of the roof bottom, it forms the rear end of the double-walled roof which protrudes over the rear window.

7. Security motor vehicle according to **claims 5 and 6** **characterised by the fact** **that** channels **(597)** which are drawn downwards are moulded into all the lower, inward-angled legs of the fringes of the withdrawn top of the canopy on the one hand, and the roof frame **(581)** that is protruding over the interior of the vehicle **(261)** on the other hand, and that these channels are furnished with draining holes **(592)** for rainwater with longitudinal slots **(596)** being integrated into the outer fringes of the roof-top above the channels so that rainwater can enter the channels via these slots.

8. Security motor vehicle according to **claim 6** **characterised by the fact** **that** longitudinal slots are integrated into the top cover of the roof **(39a)** which is swivel-mounted at the roll bar **(373)** above the collecting basin **(159a)** for the rear window **(26a)** and that a roof spoiler **(593)** which is hoisted up towards the back at an angle in front of these slots is formed into the rear roof cover.

**Revendications**

1. Véhicule de sécurité à moteur équipé d'un canal d'air qui est formé entre le toit et l'avant-toit et qui permet à un courant d'air dirigé sur le pare-brise de s'échapper au-dessus du toit du véhicule; l'avant-toit forme un élément du véhicule qui dépasse du pare-brise, et un collecteur d'eaux pluviales est fondu dans la masse de la paroi inférieure d'un toit à double paroi du moins au-dessus du pare-brise;

**caractérisé par le fait qu'**

un avant-toit à double paroi (580), dont la partie supérieure se trouve au niveau de la paroi supérieure du toit, est fixé au-dessus du pare-brise pour rallonger le toit à double paroi du véhicule de sécurité à moteur (13); un canal d'air (583) est formé entre le toit et l'avant-toit du véhicule par une partie surélevée de l'avant-toit qui est inclinée vers l'arrière de sorte que cette partie de l'avant-toit devient un déporteur (582).

2. Véhicule de sécurité à moteur conformément à la spécification 1

   **caractérisé par le fait que**

   le canal d'air (583) est ainsi constitué entre l'arête avant du toit du véhicule, qui fait fonction de déflecteur (584), et la partie surélevée de l'avant-toit inclinée vers l'arrière faisant elle-même fonction de déporteur (582), et que le canal d'air est limité de part et d'autre par des parois longitudinales (598) attachées à l'avant-toit; le déflecteur, qui suit le bombement du pare-brise (26) comme il est de pratique, est fixé entre les parois latérales du canal d'air.

3. Véhicule de sécurité à moteur conformément aux spécifications 1 et 2

   **caractérisé par le fait que**

   le déporteur (582) qui est formé d'une partie de l'avant-toit à double paroi (580) ainsi que les parois latérales longitudinales (598) délimitant le canal d'air (583) se composent également de deux parois et que le déporteur de l'avant-toit s'enroule autour du pare-brise (26) pour former une section conique.

4. Véhicule de sécurité à moteur conformément aux spécifications 1 et 2

   **caractérisé par le fait que**

   l'avant-toit (580) ne se compose de deux parois que devant la paroi extérieure (188) du collecteur (159), qui est adaptée à la forme du pare-brise (26) et prévue pour l'irrigation de celui-ci, et que l'avant-toit du véhicule est équipé d'un couvercle (39') à fentes longitudinales qui se trouve au-dessus d'un collecteur d'appoint (240) qui est fondu dans la partie avant de la paroi inférieure de l'avant-toit; ce collecteur d'appoint est prévu pour l'irrigation du pare-brise lorsque le véhicule est en marche. Une partie de l'avant-toit déborde de la paroi inférieure du toit (280) recouvrant l'intérieur du véhicule (261) de sorte que l'avant-toit recouvre l'aire balayée par un bras d'essuie-glace (33) prévu pour le pare-brise. L'extrémité de l'avant-toit est encadrée de bords à double paroi (588) qui sont orientés vers le bas; ces bords sont orientés vers l'intérieur immédiatement derrière l'aire balayée par le bras d'essuie-glace, la partie inférieure de ces bords est fixée sur la paroi inférieure du toit du véhicule. Au-dessus du parebrise, la partie frontale du toit forme la paroi intérieure d'un collecteur (159); une partie de cette paroi est plane, l'autre est surélevée et inclinée vers l'arrière. La partie frontale de la paroi extérieure (188) de ce collecteur, qui se trouve au-dessous du déflecteur (584) et de la paroi inférieure de l'avant-toit, forme, avec ces deux parties du véhicule, une fente transversale permettant au bras d'essuie-glace, coudé en angle droit, d'effectuer sa course horizontalement à travers la fente précitée.

5. Véhicule de sécurité à moteur conformément à la spécification 4

   **caractérisé par le fait que**

   l'avant-toit à double paroi (580), de part et d'autre du canal d'air (583), est allongé vers l'arrière par une couverture et que la partie frontale de cette couverture est équipée d'un couvercle à fentes longitudinales (39) fixé sur le collecteur (159) qui se trouve au-dessus du pare-brise (26); la couverture et la paroi inférieure du toit (280) forment ainsi la partie avant du toit à double paroi, limitée par un arceau de sécurité (373) qui est disposé comme il est de pratique; la couverture retirée de l'avant-toit à double paroi et l'extrémité de celui-ci ainsi que l'arceau de sécurité se trouvent au même niveau. La couverture de l'avant-toit est orientée vers le bas et inclinée vers l'intérieur conformément à la hauteur prévue pour l'avant-toit de sorte que les côtés de la couverture qui sont inclinés vers le bas forment les parois extérieures de la partie frontale du toit à double paroi et que les côtés de la couverture qui sont inclinés vers l'intérieur forment des sections marginales qui débordent des deux côtés de l'intérieur du véhicule (261) et qui sont directement liées au fond du toit (280).

6. Véhicule de sécurité à moteur conformément à la specification 5

   **caractérisé par le fait que**

   la partie de la couverture située immédiatement derrière l'arceau de sécurité (373) est formée par un couvercle arrière (39a) orientable qui est fixé à l'arceau de sécurité et par un cadre (581) servant de support au couvercle et que ce cadre ainsi que l'extrémité de la couverture retirée de l'avant-toit se trouvent au même niveau et que le profil de ce cadre correspond exactement au profil de la surface de l'avant-toit. Le cadre, qui déborde de la lunette arrière (26a) du véhicule, et un collecteur (159a), prévu pour l'irrigation de la lunette arrière et fondu dans une partie de la paroi inférieure du toit située au-dessus de la lunette arrière, forment la partie arrière de ce toit à double paroi qui déborde de la lunette arrière.

7. Véhicule de sécurité à moteur conformément aux spécifications 5 et 6
   **caractérisé par le fait que**
   des canaux (597) sont fondus dans les parties latérales et inclinées vers l'intérieur des sections marginales de la couverture retirée de l'avant-toit qui dépassent de l'intérieur du véhicule (261) et du cadre du toit (562) et que ces canaux sont équipés de petits orifices (592) permettant à l'eau pluviale de passer; l'extrémité de la couverture du toit laisse apparaître des fentes longitudinales (596) qui se trouvent exactement au-dessus des canaux afin que la pluie puisse s'écouler dans ces canaux à travers les fentes.

8. Véhicule de sécurité à moteur conformément à la spécification 6
   **caractérisé par le fait que**
   le couvercle arrière (39a) orientable qui est fixé à l'arceau de sécurité (373) est équipé de fentes longitudinales au-dessus du collecteur (159a) prévu pour la lunette arrière (26a) et qu'un déporteur (593) surélevé et incliné vers l'arrière est fondu dans le couvercle arrière du toit du véhicule de sécurité à moteur.

Fig.1

Fig.2

Fig.3

Fig.4

Fig.5

Fig.4a

Fig.4b

Fig.4c

Fig.4d